# EUROPÄISCHE PATENTSCHRIFT

(11) **EP 3 041 744 B1**
(45) Veröffentlichungstag und Bekanntmachung des Hinweises auf die Patenterteilung: **08.01.2020**
(21) Anmeldenummer: 14755688.0
(22) Anmeldetag: 27.08.2014
(51) Int. Cl.: B64F 1/12, B63B 35/50

(54) **LANDESTELLE FÜR EINEN HUBSCHRAUBER UND HUBSCHRAUBER**
LANDING AREA FOR A HELICOPTER AND HELICOPTER
AIRE D'ATTERRISSAGE POUR HÉLICOPTÈRE ET HÉLICOPTÈRE

(30) Priorität: 05.09.2013 DE 102013217711
(43) Veröffentlichungstag der Anmeldung: 13.07.2016
(73) Patentinhaber: Robert Bosch GmbH, 70442 Stuttgart (DE)
(72) Erfinder: SELTEN, Will, NL-5469 EN Erp (NL)
(74) Vertreter: Thürer, Andreas
(86) Internationale Anmeldenummer: PCT/EP2014/068144
(87) Internationale Veröffentlichungsnummer: WO 2015/032665

(56) Entgegenhaltungen:
- WO-A1-2012/134365
- DE-A1- 2 317 931
- US-A1- 2004 256 519
- US-A1- 2013 001 366

## Beschreibung

Die Erfindung betrifft eine Landestelle für einen Hubschrauber gemäß dem Oberbegriff des Patentanspruchs 1.

An einer Landestelle für Hubschrauber, beziehungsweise Helikopter, die beispielsweise starken Winden ausgesetzt ist oder die auf einem mobilen Fahrzeug, insbesondere einem Schiff, angeordnet ist, besteht die Notwendigkeit, den Hubschrauber festlegen zu können.

Die Druckschrift US 2013/0001366 A1 beschreibt hierzu eine Lösung, bei der ein senkrecht startendes Fluggerät von einem Netz aufgefangen werden kann.

Die Patente US 4,420,131 und EP 0 472 613 B1, sowie die Schrift WO 2012/134 365 A1 zeigen dazu jeweils eine Lösung, bei der vom Hubschrauber eine Harpune mitgeführt wird, die nach der Landung in eine von mehreren Ausnehmungen einer gitterartigen Landefläche einer ortsfesten Landestelle eingeführt wird. In Folge spreizen sich Widerhaken der Harpune ab und legen den Hubschrauber an der Landestelle fest.

Die Schrift DE 23 17 931 zeigt eine dazu verwandte Lösung, bei der der Hubschrauber einen Greifer mitführt, der mit einer gitterartigen Landefläche verriegeln kann.

Nachteilig an den bekannten Lösungen ist, dass sowohl der vorrichtungstechnische Aufwand für die Harpune oder den Greifer als auch für die entsprechend gitterartig vorbereitete Landestelle hoch ist. Zudem hat die mitzuführende Harpunenvorrichtung ein erhebliches Gewicht von circa 80 bis 100 kg. Insbesondere dadurch erweist sich die Verwendung der Lösungen für unbemannte Hubschrauber, die selbst nur ein Gewicht in der Größenordnung von typischerweise etwa 300 kg aufweisen, als ungünstig. Dies stellt ein großes Hemmnis in der Verbreitung von unbemannten Hubschraubern auf Schiffen dar.

Der Umstand, dass herkömmliche Landestellen ortsfest angeordnet sind, bringt einen weiteren Nachteil mit sich: Meist besteht die Anforderung, eine Landestelle dauerhaft für Notfälle freizuhalten, so dass ein gelandeter Helikopter nach seiner Landung so schnell wie möglich in einen Hangar oder hin zu einem anderen geeigneten Abstellplatz verlegt werden muss. Mit den herkömmlichen Lösungen ist dies jedoch nur möglich, wenn zu diesem Zweck die Festlegung über das Lösen der Harpune aufgehoben wird. Während seiner Verlegung ist der Helikopter dann weitgehend ungesichert und entsprechend anfällig gegen ungewolltes Verschieben, Neigen, Kippen bis hin zu Verlust.

Aus der US 2004/0256519 A1 ist ein Landesystem zum Landen eines Hubschraubers auf einem Schiff bekannt, das eine Landefläche auf dem Schiff aufweist, die von einem flächigen Befestigungsmittel bedeckt ist. Auch am Hubschrauber is ein an das flächige Befestigungsmittel der Landefläche angepasstes, flächiges Befestigungsmittel angeordnet. Beim Aufsetzen des Hubschraubers auf die Landefläche verhaken sich die flächigen Befestigungsmittel ineinander, so dass der Hubschrauber festgehalten wird.

Demgegenüber liegt der Erfindung die Aufgabe zugrunde, eine Landestelle für einen Hubschrauber zu schaffen, an der dieser einfach festlegbar ist und von der der Hubschrauber auch gestartet werden kann.

Die Aufgaben werden gelöst durch eine Landestelle mit den Merkmalen des Patentanspruchs 1.

Vorteilhafte Weiterbildungen der Landestelle sind in den Patentansprüchen 2 bis 13 beschrieben.

Eine Landestelle für einen insbesondere unbemannten Hubschrauber, die auf einem Landfahrzeug oder Seefahrzeug, insbesondere auf einem Schiff anordenbar oder angeordnet ist, hat eine Landefläche, an der der Hubschrauber beim Landen und danach abstützbar ist. Erfindungsgemäß ist die Landefläche zumindest abschnittsweise, insbesondere vollständig, von einem flächigen Befestigungsmittel bedeckt, über das der Hubschrauber an der Landestelle insbesondere kraftschlüssig und / oder formschlüssig und / oder stoffschlüssig festlegbar oder befestigbar ist.

Da das Befestigungsmittel an der Landefläche flächig ausgebildet ist, entfällt die Notwendigkeit, eine Befestigungsvorrichtung der Landefläche mit hoher Präzision treffen zu müssen, wie es bei den Lösungen des Standes der Technik notwendig ist. Der Hubschrauber ist so auf einfachere Weise, allein durch seine Abstützung / sein Landen auf dem Befestigungsmittel festlegbar. Dadurch kann zudem auf das Mitführen der schweren und vorrichtungstechnisch aufwendigen Harpunenvorrichtung im Hubschrauber verzichtet werden, wodurch das Gewicht des Hubschraubers reduzierbar ist. Besonders für unbemannte Hubschrauber, die ein vergleichsweise geringes Gewicht, vorzugsweise zwischen 30 und 700kg, aufweisen, ist dies von großem Vorteil. Die auf diese Weise vereinfachte Landung und Festlegung des Hubschraubers auf der Landefläche kann sich positiv auf die Verwendung von unbemannten Hubschraubern, insbesondere im marinen Bereich, auswirken, da mit der Lösung ein gewichtiger Nachteil des Standes der Technik für die leichten, unbemannten Hubschrauber entfällt.

Die Landefläche kann über eine zusammenhängende oder über mehrere, zueinander beabstandete Flächenabschnitte ausgebildet sein. Sie stellt einen Abschnitt der Landestelle dar, der vom Hubschrauber beim Landen berührbar ist.

In einer bevorzugten Weiterbildung ist die Landefläche im Wesentlichen planar.

In einer besonders bevorzugten Weiterbildung weist das Befestigungsmittel der Landestelle insbesondere textile und/oder metallische und/oder Kunststoffelemente auf, die nach dem Klettprinzip wirken (Klett- beziehungsweise Velcroelemente) und die zur Festlegung in Eingriff mit angepassten Elementen des angepassten Befestigungsmittels des Hubschraubers bringbar sind. Aus der einfachen Bedienbarkeit dieser Art von Befestigungsmittel ergibt es sich, dass das Festlegen und Lösen des Hubschraubers eine hohe Prozesssicherheit aufweist. Die Verwendung von Klettelementen erweist sich dabei als universell nutzbar, kostengünstig und gewichtssparend. Zudem ist der Hubschrauber unmittelbar mit seinem Kontakt mit der Landestelle, das heißt sehr schnell, festgelegt.

Um einen festgelegten Hubschrauber von der Landestelle auf einfache Weise zu lösen, sind das Befestigungsmittel der Landestelle und zumindest der davon bedeckte Abschnitt der Landefläche in einer erfindungsgemäßen Ausbildung von wenigstens einer Ausnehmung durchbrochen, in der eine Stützvorrichtung aufgenommen ist. Diese kann zur Abstützung des Hubschraubers in Anlage mit einer Landeseite oder Unterseite des Hubschraubers, beispielsweise mit dessen Kufen, gebracht werden. Vorzugsweise sind die Stützvorrichtung und die durchbrochene Landefläche entweder einzeln oder beide relativ zueinander bewegbar.

In einer Variante ist zum Lösen des Hubschraubers zumindest der durchbrochene Abschnitt der Landefläche zusammen mit dem daran angeordneten, flächigen Befestigungsmittel relativ gegen die Stützvorrichtung bewegbar, besonders bevorzugt absenkbar. In einer anderen Variante ist zum Lösen des Hubschraubers die Stützvorrichtung zumindest relativ zum genannten Abschnitt und zum ihn bedeckenden, flächigen Befestigungsmittel bewegbar, vorzugsweise anhebbar. Im ersten Fall wird die Befestigung durch Wegziehen der Landefläche und des Befestigungsmittels vom Hubschrauber, im zweiten Fall durch Wegdrücken des Hubschraubers von der Landefläche und vom Befestigungsmittel gelöst. In beiden Fällen verbleibt der Hubschrauber nach dem Lösen frei auf der Stützvorrichtung und kann abheben.

Alternativ dazu kann die Stützvorrichtung beispielsweise mehrere rotierbare, exzentrisch gelagerte oder ausgebildete Elemente in Form von Walzen aufweisen. Insbesondere bei nur geringer Exzentrizität kann mit einer Rotation dieser Elemente die kraftschlüssige und / oder formschlüssige und / oder stoffschlüssige Verbindung ruckfrei gelöst werden.

Um Stützkräfte der Stützvorrichtung möglichst gleichmäßig verteilt auf den Hubschrauber zu übertragen, weisen in einer bevorzugten Weiterbildung die Ausnehmung oder Ausnehmungen und die Stützvorrichtung jeweils eine Rasterstruktur oder eine Gitterstruktur auf.

Besonders vorteilhaft ist die Stützvorrichtung ausgebildet, wenn sie einstückig ist. Daraus resultiert bei einem Hub der Stützvorrichtung und / oder der Landefläche ein definiertes, großflächiges Lösen des Hubschraubers, wodurch ein Kippen des Hubschraubers beim Lösen vermieden werden kann. Im Falle der exzentrisch gelagerten oder ausgebildeten Elemente sind diese vorzugsweise möglichst synchron rotierbar, beispielsweise indem sie mechanisch gekoppelt sind, um das genannte definierte, großflächige Lösen zu erzielen. Vorzugsweise hat die Landestelle einen hydrostatischen oder elektrischen Antrieb, über den die Stützvorrichtung relativ zur Landefläche und / oder die Landefläche relativ zur Stützvorrichtung bewegbar ist oder über den die exzentrischen Elemente rotierbar sind.

In einer alternativen oder ergänzenden erfindungsgemäßen Ausbildung weist die Landestelle Walzen auf, die um ihre Längsachsen rotierbar sind. Dabei ist die Landefläche durch radial außen befindliche Mantelflächenabschnitte der Walzen ausgebildet. Vorzugsweise weisen die Mantelflächen jeweils einen Abschnitt auf, der vom flächigen Befestigungsmittel ausgespart ist. Sind die bedeckten Mantelflächenabschnitte einem landenden Hubschrauber zugewandt, kann dieser entsprechend der vorangegangenen Beschreibung festgelegt werden. Zur Aufhebung der Festlegung können die Walzen um ihre Längsachsen gedreht werden, so dass die kraftschlüssige und / oder formschlüssige und / oder stoffschlüssige Verbindung mit einer schälartigen Bewegung gelöst wird und die unbedeckten Abschnitte in Anlage mit dem Hubschrauber kommen. Je nach eingestelltem Drehwinkel der Walzen oder Scheiben kann somit eine Landestelle bereitgestellt werden, die dem Hubschrauber eine Landefläche mit oder ohne flächigem Befestigungsmittel anbietet.

In einer bevorzugten Weiterbildung weist die Landestelle eine Tragvorrichtung auf, an deren Oberseite die Landefläche angeordnet ist.

Insbesondere bei Verwendung der Landestelle auf einem Schiff erweist sich eine Weiterbildung als vorteilhaft, die eine Lagekompensationsvorrichtung hat, über die die Landefläche, insbesondere die Tragvorrichtung, entgegen einer Rollbewegung und/oder Gierbewegung und/oder Stampf- oder Nickbewegung des Fahrzeugs / Schiffes bewegbar ist. Auf diese Weise kann die Landefläche zumindest bezüglich der kompensierten Bewegung oder Bewegungen definiert ausgerichtet bleiben, was ein Starten und Landen eines insbesondere unbemannten Hubschraubers vereinfacht oder zumindest weniger risikoreich gestaltet. Besonders bevorzugt ist über die Lagekompensationsvorrichtung die Rollbewegung des Fahrzeugs / Schiffes kompensierbar.

Vorzugsweise hat die Landestelle eine Steuereinheit, über die die Lagekompensationsvorrichtung in Abhängigkeit wenigstens einer der genannten Bewegungen oder deren Bewegungsgeschwindigkeiten ansteuerbar ist.

In einer vorteilhaften Weiterbildung hat die Landestelle wenigstens drei, insbesondere vier, verteilt angeordnete Leuchtfeuer, über die ein landender Hubschrauber mit Hilfe einer geeigneten Steuereinheit eine Position der Landestelle, und damit des Schiffes, ermitteln kann. So ist ein Anflug- und Landevorgang des Hubschraubers sicherer. Die Leuchtfeuer sind vorzugsweise in Eckbereichen der Landestelle angeordnet.

Besonders bevorzugt ist die Landestelle mobil, so dass sie auf dem Fahrzeug nicht ortsfest, sondern bewegbar ist. Dadurch kann die Landestelle vom Deck des Fahrzeugs nach dem Landen oder Starten des Hubschraubers wieder entfernt werden, was die Ordnung und Sicherheit an Bord des Fahrzeugs erhöht. Die Landestelle kann dann beispielsweise in einen Hangar des Fahrzeugs verlegt werden. Ist die Landestelle nur für einen unbemannten Hubschrauber vorgesehen und existiert an Bord des Fahrzeugs noch eine feste Landestelle für bemannte Hubschrauber, so kann diese durch Verlegen der mobilen Landestelle, insbesondere für die bereits erwähnten Notfälle, freigehalten werden.

Im mobilen Fall ist die Steuereinheit bevorzugt derart ausgestaltet, dass über sie die Landestelle auf dem Fahrzeug automatisiert in Position bringbar ist.

Eine mobile Landestelle mit einer Landefläche für einen Hubschrauber, insbesondere die Landestelle der vorangegangenen Beschreibung, weist vorzugsweise wenigstens zwei antreibbare Räder auf, die an einer der Landefläche gegenüber angeordneten Unterseite der Landestelle oder an deren Randseiten, etwa im Bereich einer Querachse, insbesondere Mittelachse, der Landestelle angeordnet sind. Zudem hat die Landefläche in diesem Fall wenigstens zwei Stützeinrichtungen, die an der Unterseite der Landestelle, insbesondere in einem Randbereich der Unterseite, auf verschiedenen Seiten der Querachse angeordnet sind. Diese Landestelle ist mobil, lagestabil und aufgrund der geringen Räderanzahl vorrichtungstechnisch einfach ausgebildet.

In einer bevorzugten Weiterbildung sind Drehachsen der antreibbaren Räder etwa koaxial angeordnet. Dadurch ergibt sich eine leichte Steuerbarkeit der mobilen Landestelle und eine gute Spurtreue.

In einer bevorzugten Weiterbildung hat die mobile Landestelle, zusätzlich zu den genannten zwei Stützeinrichtungen, wenigstens eine weitere Stützeinrichtung, die an der Unterseite angeordnet ist. Dabei sind wenigsten zwei der Stützeinrichtungen jeweils in einem Eckbereich der Landestelle oder zumindest weit entfernt von einer zentralen Hochachse der Landestelle angeordnet. Auf diese Weise ist die mobile Landestelle noch lagestabiler. Besonders bevorzugt hat die mobile Landestelle vier Stützeinrichtungen, die jeweils in einem Eckbereich der Landestelle oder in einem vergleichsweise weit von der Hochachse entfernt angeordneten Bereich angeordnet sind.

In einer bevorzugten Weiterbildung weisen die Stützeinrichtungen zur Abstützung jeweils wenigsten ein Stützrad oder wenigstens ein Gleitstück auf. Das Stützrad hat den Vorteil einer geringen Rollreibung auf dem Fahrzeug, das Gleitstück den Vorteil der vorrichtungstechnischen Einfachheit und Robustheit.

Alternativ oder ergänzend zu den antreibbaren Rädern, kann die mobile Landestelle in einer bevorzugten Weiterbildung wenigstens zwei antreibbare Ketten aufweisen, die beidseitig der Landestelle, insbesondere an zwei von deren Randseiten, angeordnet sind.

In einer noch präziser lenkbaren Weiterbildung der mobilen Landestelle, hat diese vier verteilt angeordnete, lenkbare Räder, von denen wenigstens eins, bevorzugt zwei oder alle, antreibbar sind. Alternativ dazu können lediglich zwei der vier Räder lenkbar sein. Dies entspricht dann etwa der Lenkung eines herkömmlichen Fahrzeugs, die sich als etwas weniger variabel als die vorgenannte Lösung mit vier lenkbaren Rädern bei gleichzeitig verringertem vorrichtungstechnischem und steuerungstechnischem Aufwand erweist.

In einer bevorzugten Weiterbildung hat die mobile Landestelle zwei antreibbare, schwenkfeste Räder und wenigstens ein schwenkbares, lenkbares Rad, wobei die schwenkfesten Räder diesseits und das oder die schwenkbaren Räder jenseits einer Quer- oder Mittelachse der Landestelle angeordnet sind.

In einer anderen Weiterbildung der mobilen Landestelle hat diese wenigstens ein, insbesondere wenigstens zwei antreibbare und schwenkfeste Räder und zudem mehrere fest gelagerte Rollen, die in Eingriff mit Schienen oder Nuten des Fahrzeugs bringbar sind.

Um die Manövrierfähigkeit der mobilen Landestelle zu verbessern, sind in einer besonders bevorzugten Weiterbildung die antreibbaren Räder oder die antreibbaren Ketten mit verschiedenen Drehzahlen und/oder verschiedenen Drehrichtungen antreibbar. Auf diese Weise können je nach Weiterbildung enge Kurvenradien oder sogar ein Drehen auf der Stelle, um eine Hochachse der Landestelle ermöglicht werden.

Vorzugsweise weist die Landestelle eine eigene, vom Fahrzeug zumindest zeitweise unabhängige Energieversorgung auf. Über diese ist insbesondere ein Antrieb zur Bewegung der Stützvorrichtung relativ zur Landefläche und/oder umgekehrt, und/oder ein Antrieb der Räder oder Ketten, und/oder die Lagekompensationsvorrichtung, und/oder die Steuereinheit, und/oder eine Lenkung der Landestelle versorgbar.

Bevorzugt sind die Räder oder die Ketten oder die Stützeinrichtungen an der Tragvorrichtung oder an einem Fahrwerk der Landestelle angeordnet.

Im Folgenden werden acht Ausführungsbeispiele einer erfindungsgemäßen Landestelle und ein Hubschrauber in zwölf Figuren näher erläutert. Es zeigen:
Figur 1 erste Ausführungsbeispiele einer Landestelle und eines Hubschraubers auf einem Schiff,
Figur 2 den Hubschrauber und die Landestelle gemäß Figur 1,
Figur 3 den Hubschrauber und die Landestelle während einer Rollbewegung des Schiffes,
Figur 4 den Hubschrauber und die Landestelle gemäß den vorangegangenen Figuren in einer perspektivischen Unteransicht,
Figur 5 ein zweites und drittes Ausführungsbeispiel einer Landestelle,
Figur 6 ein viertes Ausführungsbeispiel einer Landestelle,
Figur 7 ein fünftes Ausführungsbeispiel einer Landestelle,
Figur 8 ein sechstes Ausführungsbeispiel einer Landestelle,
Figur 9 ein siebtes Ausführungsbeispiel einer Landestelle,
Figur 10 ein achtes Ausführungsbeispiel einer Landestelle in einer perspektivischen Ansicht,
Figur 11 das Ausführungsbeispiel gemäß Figur 10 in einer Seitenansicht mit und ohne festgelegtem Hubschrauber, und
Figur 12 das Ausführungsbeispiel gemäß Figur 8, ergänzt um ein Leuchtfeuer.

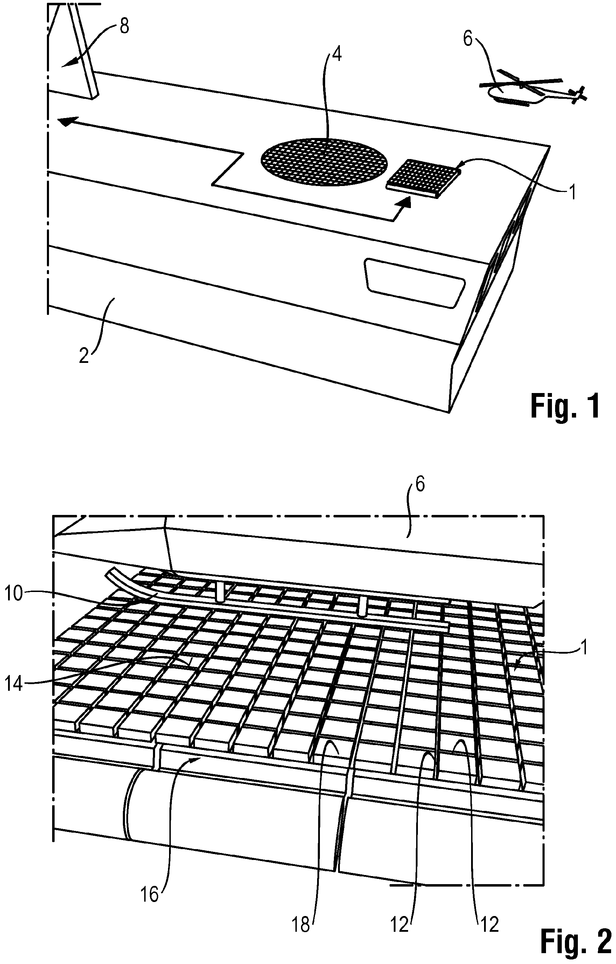

Gemäß Figur 1 ist auf einem Schiff 2 der Fregattenklasse ein erstes Ausführungsbeispiel einer Landestelle 1 im Heckbereich angeordnet. Das Schiff 2 weist eine weitere, feste Landestelle 4 auf, die für bemannte Hubschrauber vorgesehen und für Notfälle freizuhalten ist. Die Landestelle 1 ist hingegen mobil und für einen kleineren, unbemannten Hubschrauber 6 vorgesehen. Dieser befindet sich gemäß Figur 1 im Anflug oder in einer Abhebephase unweit oberhalb der Landestelle 1.

Die mobile Landestelle 1 kann von einer Steuereinheit (nicht dargestellt) gesteuert in einen Hangar 8 verlegt werden. Die Verlegung kann beispielsweise über den skizzierten Verlegepfad automatisiert erfolgen.

Figur 2 zeigt den gelandeten Hubschrauber 6 auf der Landestelle 1 in einer vergrößerten Detaildarstellung. Der Hubschrauber 6 ist mit Kufen 10 an einer von Ausnehmungen 12 durchbrochenen Landefläche 14 abgestützt. Die Ausnehmungen 12 weisen eine Gitterstruktur auf. Die Landefläche 14 ist dabei an einer Oberseite einer Tragvorrichtung 16 angeordnet.

Die Landefläche 14 weist aufgrund der gitterartigen Ausnehmungen 12 eine kachelartige Struktur auf. Sie ist im gezeigten Ausführungsbeispiel vollständig mit einem flächigen Befestigungsmittel 18, das eine Vielzahl von Klettelementen aufweist, bedeckt. Auch an einer Unterseite der Kufen 10 ist ein angepasstes flächiges Befestigungsmittel (nicht dargestellt), das ebenfalls Klettelemente aufweist, angeordnet. Über den so gebildeten Klettverschluss ist der Hubschrauber 6 vorrichtungstechnisch einfach und sicher an der Landestelle 1 festgelegt, sobald er mit einem ausreichenden Gewicht und einer ausreichenden Kufenfläche auf der Landefläche 14 abgestützt ist.

Zum Abheben des Hubschraubers 6 von der Landestelle 1 und zum Lösen des Klettverschlusses, ist in den Ausnehmungen 12 eine Stützvorrichtung, die eine an die Ausnehmungen 12 angepasste Gitterstruktur aufweist, angeordnet (verdeckt). Die Stützvorrichtung ist in den Ausnehmungen 12 quer zur Landefläche 14 linear bewegbar.

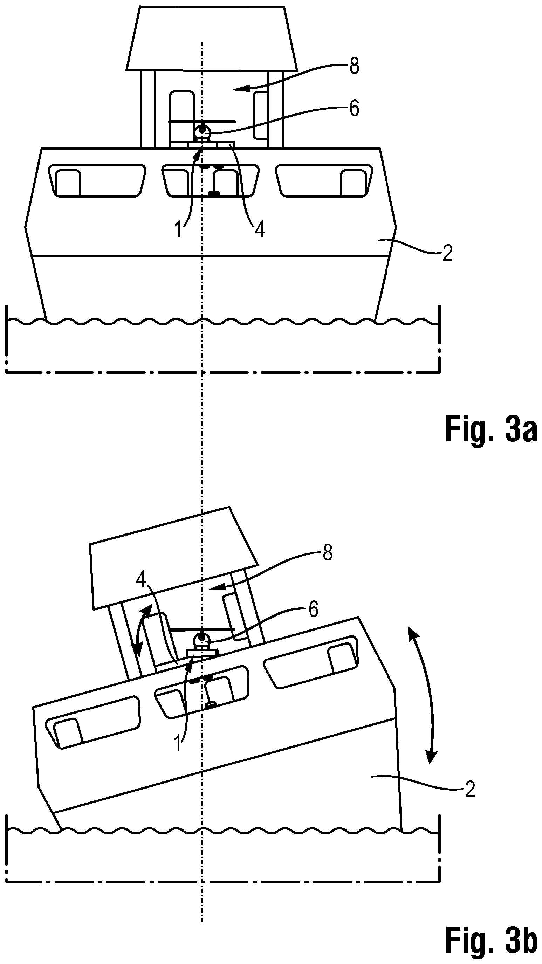

Figur 3a zeigt das Schiff zusammen mit der Landestelle 1, der festen Landestelle 4 und dem Hubschrauber 6 in einer Ansicht von hinten bei ruhiger See. Hinter dem Hubschrauber 6 ist der Hangar 8 zu erkennen. Es ist gut zu erkennen, dass die Landestelle horizontal ausgerichtet ist. Da unbemannte Hubschrauber bei Wellengang und entsprechend unruhigem Schiff 2, wenn dieses beispielsweise eine Roll-, Gier- und eine Stampfbewegung ausführt, nur schwierig oder nur mit hohem Risiko zu starten und zu landen sind, weist die Landestelle 1 eine Lagekompensationsvorrichtung und eine Steuereinheit auf (beide nicht dargestellt), über die ein aus der Rollbewegung des Schiffes 2 resultierender Rollwinkel und seitlicher Versetz kompensierbar ist. Dies zeigt Figur 3b, wobei die Rollbewegung des Schiffes 2 und die Kompensationsbewegung der Landestelle 1 entgegen dem Rollwinkel durch entsprechende Doppelpfeile symbolisiert sind. Dadurch ist ein Landen auf, ein Starten von und ein Transportieren mit der Landestelle 1 sicherer und einfacher durchzuführen.

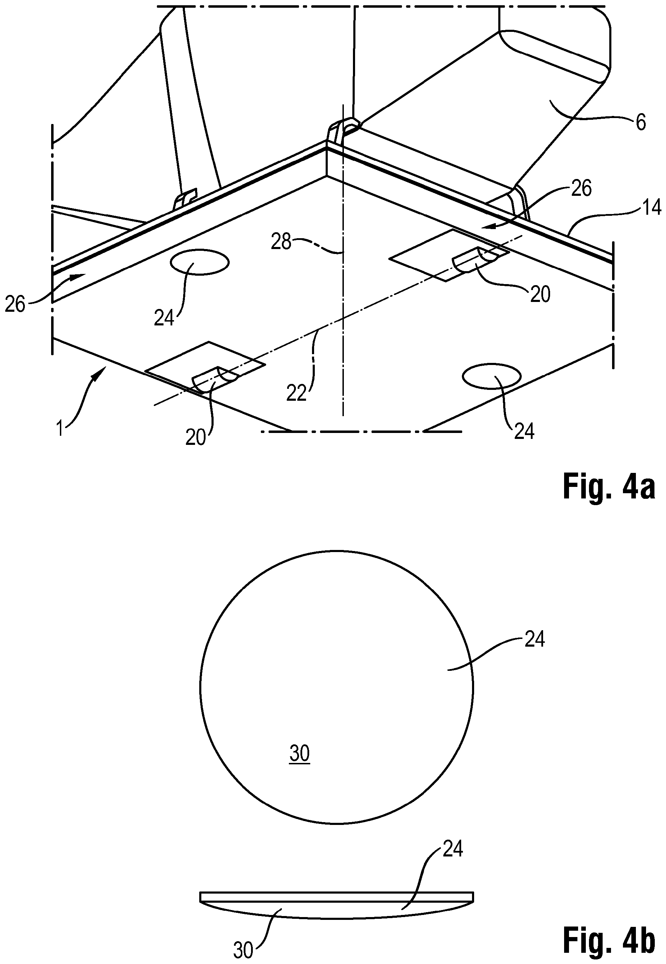

Figur 4a zeigt die Landestelle 1 mit dem Hubschrauber 6 in einer perspektivischen Unteransicht. An einer Unterseite der Landestelle 1 sind zwei antreibbare Räder 20 in jeweils einer Radbox angeordnet. Die Räder 20 sind unabhängig voneinander mit unterschiedlicher Drehzahl und Drehrichtung antreibbar. Drehachsen der Räder 20 fallen dabei etwa mit einer Querachse 22 der Landestelle koaxial zusammen. Dadurch ist eine gute Steuerbarkeit und Spurtreue der Landestelle 1 gegeben. Zur Erhöhung der Kippstabilität der Landestelle 1 tragen zwei auf unterschiedlichen Seiten der Querachse 22 angeordnete, als Gleitstücke ausgeführte Stützeinrichtungen 24 bei, über die die Landestelle auf Deck abgestützt ist. Die Räder 20 und die Gleitstücke 24 sind dabei nahe von Randseiten 26 der Landestelle 1 angeordnet, wodurch die Kippstabilität bezogen auf die Anzahl der Räder 20 und Stützeinrichtungen 24 optimal ist.

Figur 4b zeigt eins der Gleitstücke 24 in einer Unter- und einer Seitenansicht. Es ist bezogen auf eine Hochachse 28 der Landestelle 1 gemäß Figur 4a sehr flach, tellerartig ausgebildet und weist eine kugelabschnittförmige Unterseite 30 auf, die in Anlage mit dem Deck bringbar ist. Aufgrund der flachen Kugelabschnittform ist eine mechanische Biegebelastung der Gleitstücke 24 beim Bewegen der Landestelle 1 auf dem Schiff 2 minimiert und ein Verhaken mit Unebenheiten an Deck kann ausgeschlossen werden.

Für die folgenden Ausführungsbeispiele wurde auf die Darstellung der Ausnehmungen 12 aus Gründen der Übersichtlichkeit verzichtet. Nichtsdestotrotz weisen die ersten sieben Ausführungsbeispiele diese auf. Für Komponenten der Landestellen, die über die Ausführungsbeispiele hinweg gleich sind, werden im Folgenden gleichbleibende Bezugszeichen verwendet. Damit ist eine Abweichung in der geometrischen Dimensionierung der Komponenten jedoch nicht ausgeschlossen.

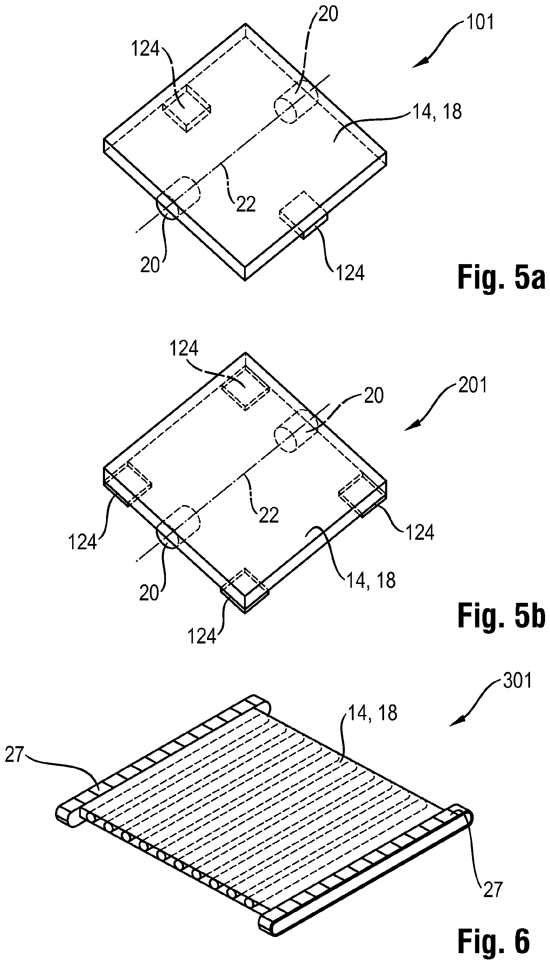

Eine Landestelle 101 gemäß Figur 5a entspricht im Wesentlichen der Landestelle 1 der vorangegangenen Beschreibung. Es wird daher weit überwiegend auf die Unterschiede eingegangen. Anders als beim ersten Ausführungsbeispiel sind Gleitstücke 124 mit rechteckigem Querschnitt ausgeführt und weisen zudem eine Aufhängung, beispielsweise ein Federdämpfersystem auf, so dass sichergestellt ist, dass die Räder 20 zu jeder Zeit Traktion auf dem Deck haben. Auch dieses Ausführungsbeispiel weist eine gute Manövrierfähigkeit, die Möglichkeit einer einfachen Steuerungssoftware und eine geringe vorrichtungstechnische Komplexität auf. Wie beim ersten Ausführungsbeispiel können die Räder mit unterschiedlichen Geschwindigkeiten und Drehrichtungen gesteuert werden, so dass auch hier kleine Kurvenradien oder sogar Drehungen um die eigene Hochachse der Landestelle 101 möglich sind.

Figur 5b zeigt ein drittes Ausführungsbeispiel einer Landestelle 201, die im Wesentlichen derjenigen gemäß Figur 5a entspricht. Abweichend von dieser weist die Landestelle 201 jedoch vier Gleitstücke 124 auf, die mit der genannten Aufhängung in Eckbereichen der Landestelle 201 angeordnet sind. Gegenüber der Landestelle 101 gemäß Figur 5a ist dadurch die Kippstabilität der Landestelle 201 erhöht.

Gemäß Figur 6 hat ein viertes Ausführungsbeispiel einer Landestelle 301 anstatt Räder Ketten 27, die an verschiedenen Randseiten der Landestelle 301 angeordnet sind, und die über die Steuereinheit ebenso unabhängig voneinander mit unterschiedlichen Drehgeschwindigkeiten und Drehrichtungen steuerbar sind. Die Ketten 27 weisen dabei eine hohe Traktion auf dem Deck auf und erleichtern eine geradlinige Bewegung der Landstelle 301 mit nur geringem Steuerungsaufwand. Ein weiterer Vorteil ist eine geringe Bauhöhe der Landestelle 301 und eine vergleichsweise einfache Steuerungssoftware. Auch die Manövrierfähigkeit ist gut.

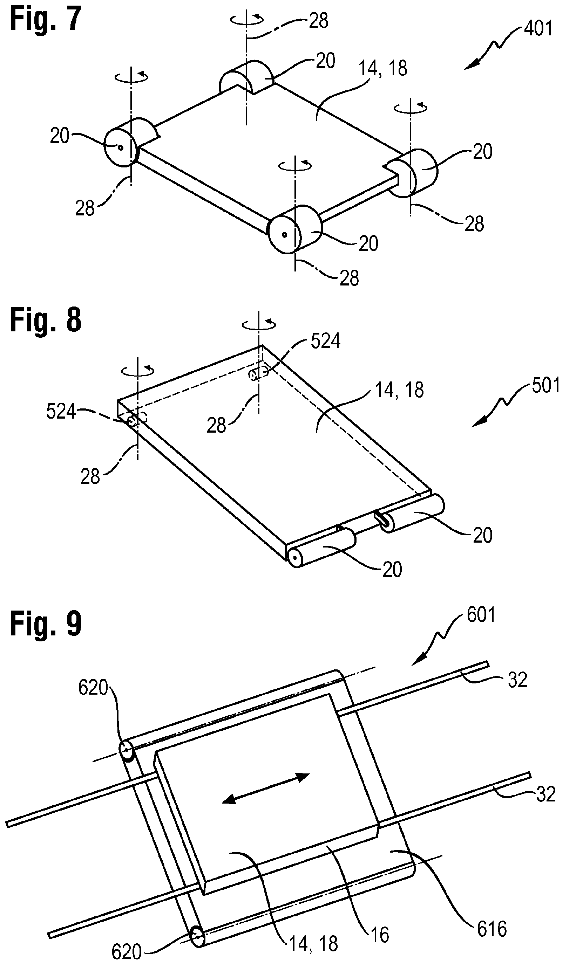

Eine besonders fein und variabel zu manövrierende Landestelle 401 zeigt das Ausführungsbeispiel in Figur 7. Jeweils an einem Eckbereich der Landestelle 401 ist dabei ein antreibbares Rad 20 angeordnet, das zudem um seine Hochachse 28 mit einem vollem Umfangswinkel von 360° verschwenkbar ist. Die Landestelle 401 weist pro Rad 20 jeweils einen Antriebsmotor und einen Schwenkmotor auf (nicht dargestellt). Dieses Konzept weist die feinste und variabelste Manövrierfähigkeit aller gezeigten Ausführungsbeispiele auf. Zudem ist es über die Räder 20 an allen vier Ecken stabil abgestützt. Die Antriebsgeschwindigkeit der Räder 20 kann kontinuierlich angepasst (erhöht, verringert) werden.

Gemäß Figur 8 hat ein sechstes Ausführungsbeispiel einer Landestelle 501 zwei an einer Stirnseite der Landestelle 501 angeordnete, antreibbare Räder 20. Diese sind mit unterschiedlichen Geschwindigkeiten ansteuerbar. An einer gegenüber angeordneten, rückwärtigen Randseite der Landestelle 501 sind an der Unterseite, in Eckbereichen, um ihre Hochachse 28 schwenkbare Stützräder 524 angeordnet. Diese Stützeinrichtungen reagieren passiv auf die von den Rädern 20 vorgegebene Geschwindigkeit und Bewegungsrichtung der Landestelle 501. Insbesondere in diesem Ausführungsbeispiel muss die Drehgeschwindigkeit der beiden Räder 20 erfasst und über die Steuereinheit gesteuert werden, um eine geradlinige Bewegung der Landestelle 501 sicherzustellen. Auch dieses Ausführungsbeispiel hat den Vorteil einer geringen Bauhöhe und einer vergleichsweise einfachen Steuerungssoftware. Auch die Manövrierfähigkeit ist vergleichsweise gut.

Ein siebtes Ausführungsbeispiel einer Landestelle 601 hat eine Haupttragvorrichtung 616, auf der die Tragvorrichtung 16 mit der Landefläche 14 und dem flächigen Befestigungsmittel 18 angeordnet ist. Die Haupttragvorrichtung 616 hat an zwei Randseiten jeweils ein Rad 620 in Form einer langgestreckten Walze. Über die Walzen 620 ist die Haupttragvorrichtung 616 in gerader Linienführung aus dem Hangar (vgl. Figur 1) an die gewünschte oder vorbestimmte Landeposition manövrierbar. Dort angelangt wird die Haupttragvorrichtung 616 mit Hilfe von Bremsen festgelegt. Im Anschluss kann die Tragvorrichtung 16 auf Führungen 32 in Querrichtung nach links und rechts positioniert werden. Die Führungen 32 sind auf der Haupttragvorrichtung 616 angeordnet.

Mit Hilfe des letztgenannten Ausführungsbeispiels ist eine einfache Lagekompensation ermöglicht, indem die Landestelle 601 von ihrer Haupttragvorrichtung 616 vorzugsweise bis zur Mitte des Decks gebracht wird und ein Querversatz, der aus einer Rollbewegung des Schiffes 2 resultiert, über eine angepasste Gegenbewegung der Tragvorrichtung 16 nach links und rechts ausgeglichen wird. Diese sehr einfache Form der Lagekompensation berücksichtigt jedoch nicht die aus der Rollbewegung resultierende Höhenänderung in Randbereichen der Landefläche 14. Vorteilhaft ist, dass zur Lagekompensation nur das vergleichsweise geringe Gewicht der Tragvorrichtung 16 bewegt werden muss. Die Steuerungssoftware für dieses mobile Ausführungsbeispiel ist vergleichsweise einfach ausgebildet.

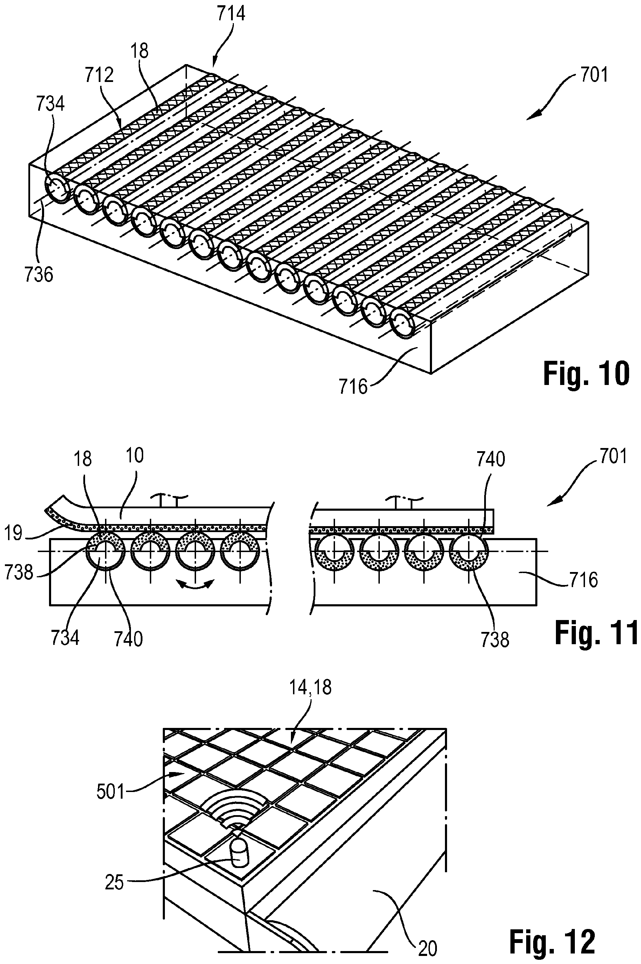

Figur 10 zeigt ein achtes Ausführungsbeispiel einer Landestelle 701 in einer perspektivischen Ansicht, mit einem von den bisherigen Ausführungsbeispielen abweichenden Konzept zum Festlegen und Lösen des Hubschraubers. Die Landestelle 701 weist hierfür eine Vielzahl von im Wesentlichen kreiszylindrischen Walzen 734 auf, die in einer Tragvorrichtung 716 um ihre Längsachsen 736 drehbar aufgenommen sind.

Jede der Walzen 734 hat einen vom Befestigungsmittel 18 bedeckten Mantelflächenabschnitt 738 und einen diametralen, vom Befestigungsmittel 18 ausgesparten Mantelflächenabschnitt 740. Die Tragvorrichtung 716 weist an ihrer dem Hubschrauber zugewandten Oberseite Ausnehmungen 712 auf, in die hinein jeweils ein Segment der Walzen 734 ragt. In Abhängigkeit eines Drehwinkels der Walzen 734 sind somit in den Ausnehmungen 712 das Befestigungsmittel 18 oder der ausgesparte Mantelflächenabschnitt 740 oder beide angeordnet. Figur 10 zeigt die vom Befestigungsmittel 18 ausgefüllten Ausnehmungen 712, wodurch die Landestelle 701 zur Festlegung des Hubschraubers vorbereitet ist.

In einer Seitenansicht der Landestelle 701 gemäß Figur 11 sind die Kufen 10 des gelandeten Helikopters auf den Walten 734 abgestützt dargestellt. In Figur 11 links ist ein Zustand gezeigt, in dem der Hubschrauber festgelegt ist. Entsprechend sind die Mantelflächenabschnitte 738 der Walzen 734 mit dem Befestigungsmittel 18 durch die Ausnehmungen 712 hindurch den Kufen 10 zugewandt. Diese sind mit ihrem angepassten Befestigungsmittel 19 daran abgestützt und so festgelegt. Die ausgesparten Mantelflächenabschnitte 740 sind vom Hubschrauber abgewandt.

Eine Dicke der Befestigungsmittel 18, 19 in Figur 11 ist zur Veranschaulichung übertrieben dargestellt. So ist gut zu erkennen, dass im gezeigten Ausführungsbeispiel das Befestigungsmittel 18 über eine Oberseite der Tragvorrichtung 716 hinausragt, so dass die Kufen 10 im festgelegten Zustand etwas beabstandet zur Tragvorrichtung 716 angeordnet sind.

Zum Lösen des Hubschraubers von der Landestelle 701 werden die Walzen 734 entweder links oder rechts herum in Rotation versetzt, was in Figur 11 durch den Doppelpfeil symbolisiert ist. Entsprechend erfolgt die Trennung der Befestigungsmittel 18, 19 durch eine Schälbewegung, bis nur noch die unbedeckten Mantelflächenabschnitte 740 der Walzen 734 mit dem Befestigungsmittel 19 in Anlage sind. Diesen Zustand, in dem der Hubschrauber freigegeben ist, zeigt Figur 11 rechts.

Mit der Rotation der Walzen 734 kann es in Abhängigkeit ihres Durchmessers und eines vom Befestigungsmittel 18 überdeckten Umfangswinkels zu einer translatorischen Verschiebung des Hubschraubers parallel zur Oberseite der Tragvorrichtung 716 kommen. Dann zeigt sich der Umstand, dass die Kufen 10 im festgelegten Zustand etwas beabstandet zur Tragvorrichtung 716 angeordnet sind, als vorteilhaft, da so ein Schleifen der Kufen 10 mit dem Befestigungsmittel 19 an der Tragvorrichtung vermieden wird.

In Figur 12 ist ein Ausschnitt des Ausführungsbeispiels gemäß Figur 8, ergänzt um ein Leuchtfeuer 25 (Beacon) zur Anflug-, Abflug- und Landenavigation des Hubschraubers, dargestellt.

Abweichend von den gezeigten Ausführungsbeispielen kann alternativ oder ergänzend die Landefläche relativ zur Stützvorrichtung bewegbar, insbesondere absenkbar sein, um die Befestigung des Hubschraubers an der Landestelle zu lösen.

Offenbart ist eine Landestelle für einen Hubschrauber die auf einem bewegbaren oder unruhigen Untergrund angeordnet ist oder starken Winden ausgesetzt ist. Zur schnellen und einfachen Festlegung des Fluggerätes auf der Landestelle ist deren Landefläche zumindest abschnittsweise von einem flächigen Befestigungsmittel bedeckt.

### Bezugszeichenliste

- 1; 101; 201; 301; 401; 501; 601; 701: Landestelle
- 2: Schiff
- 4: feste Landestelle
- 6: Hubschrauber
- 8: Hangar
- 10: Kufe
- 12; 712: Ausnehmung
- 14; 714: Landefläche
- 16; 716: Tragvorrichtung
- 18: flächiges Befestigungsmittel
- 19: flächiges Befestigungsmittel
- 20: antreibbares Rad
- 22: Querachse
- 24; 124; 524: Stützeinrichtung
- 25: Leuchtfeuer
- 26: Randseite
- 28: Hochachse
- 30: Unterseite
- 27: Kette
- 32: Führung
- 616: Haupttragvorrichtung
- 620: Walze
- 734: Walze
- 736: Rotationsachse
- 738: Mantelflächenabschnitt
- 740: Mantelflächenabschnitt

## Patentansprüche

1. Landestelle für einen Hubschrauber (6), die auf einem Land- oder Seefahrzeug, insbesondere auf einem Schiff (2), anordenbar ist, mit einer Landefläche (14; 714), an der der Hubschrauber (6) abstützbar ist, wobei die Landefläche (14; 714) zumindest abschnittsweise von einem flächigen Befestigungsmittel (18) bedeckt ist und mit einem am Hubschrauber anzubringenden und an das flächige Befestigungsmittel der Landefläche anpassbaren, flächigen Befestigungsmittel, wobei ein Mittel zum Lösen der Befestigungsmittel voneinander vorgesehen ist, **dadurch gekennzeichnet, dass** die Landefläche (14) und das flächige Befestigungsmittel (18) von wenigstens einer Ausnehmung (12) durchbrochen sind, in der als Mittel zum Lösen der Befestigungsmittel voneinander eine Stützvorrichtung zur Abstützung des Hubschraubers (6) aufgenommen ist, wobei die Stützvorrichtung relativ zur Landefläche (14) bewegbar ist und / oder wobei die Landefläche (14) relativ zur Stützvorrichtung bewegbar ist, oder dass um ihre Längsachsen (736) rotierbare Walzen (734) als Mittel zum Lösen der Befestigungsmittel voneinander vorgesehen sind, wobei die Landefläche (714) zumindest abschnittsweise über radiale Mantelflächenabschnitte (738, 740) der Walzen (734) ausgebildet ist.

2. Landestelle nach Patentanspruch 1, deren flächiges Befestigungsmittel (18) Klettelemente aufweist, die in Eingriff mit Klettelementen des angepassten Befestigungsmittels (19) bringbar sind.

3. Landestelle nach Patentanspruch 1 oder 2, wobei die wenigstens eine Ausnehmung (12) und die Stützvorrichtung jeweils eine Rasterstruktur oder eine Gitterstruktur aufweisen.

4. Landestelle nach einem der vorhergehenden Patentansprüche, wobei die Stützvorrichtung einstückig ausgebildet ist.

5. Landestelle nach einem der vorhergehenden Patentansprüche mit einem hydrostatischen oder elektrischen Antrieb, über den die Stützvorrichtung relativ zur durchbrochenen Landefläche (14) bewegbar ist und / oder über den die Landefläche (14) relativ zur Stützvorrichtung bewegbar ist.

6. Landestelle nach einem der vorhergehenden Patentansprüche mit einer Lagekompensationsvorrichtung, über die die Landefläche (14; 714) entgegen einer Roll- und / oder Gier- und / oder Stampfbewegung des Fahrzeugs (2) bewegbar ist.

7. Landestelle nach einem der vorhergehenden Patentansprüche mit wenigstens zwei antreibbaren Rädern (20), die an einer der Landefläche (14) gegenüber angeordneten Unterseite der Landestelle (1; 101; 201) oder an Randseiten der Landestelle, etwa im Bereich einer Querachse (22) der Landestelle (1; 101; 201), angeordnet sind, und mit wenigstens zwei Stützeinrichtungen (24), die an der Unterseite auf verschiedenen Seiten der Querachse (22) angeordnet sind.

8. Landestelle nach Patentanspruch 7, wobei Drehachsen der antreibbaren Räder (20) etwa koaxial angeordnet sind.

9. Landestelle nach Patentanspruch 7 oder 8 mit wenigstens einer weiteren Stützeinrichtungen (24), die an der Unterseite angeordnet ist, wobei wenigstens zwei der Stützeinrichtungen (24) jeweils in einem Eckbereich der Tragvorrichtung (201) angeordnet sind.

10. Landestelle nach einem der Patentansprüche 7 bis 9, wobei die Stützeinrichtungen zur Abstützung jeweils wenigstens ein Stützrad (524) oder wenigstens ein Gleitstück (24; 124) aufweisen.

11. Landestelle nach einem der Patentansprüche 7 bis 10, wobei die antreibbaren Räder (20) mit verschiedenen Drehzahlen und / oder verschiedenen Drehrichtungen antreibbar sind.

## Claims

1. Landing pad for a helicopter (6), which pad can be arranged on a land vehicle or sea vessel, in particular on a ship (2), having a landing surface (14; 714) on which the helicopter (6) can be supported, wherein the landing surface (14; 714) is covered at least in certain portions by a flat securing means (18), and having a flat securing means which is to be fitted to the helicopter and which can be adapted to the flat securing means of the landing surface, wherein a means for releasing the securing means from one another is provided, **characterized in that** the landing surface (14) and the flat securing means (18) are breached by at least one clearance (12) in which a supporting device for supporting the helicopter (6) is received as means for releasing the securing means from one another, wherein the supporting device is movable relative to the landing surface (14) and/or wherein the landing surface (14) is movable relative to the supporting device, or **in that** rollers (734) which can be rotated about their longitudinal axes (736) are provided as means for releasing the securing means from one another, wherein the landing surface (714) is formed at least in certain portions by means of radial lateral surface portions (738, 740) of the rollers (734) .

2. Landing pad according to Patent Claim 1, the flat securing means (18) of which has hook and loop elements which can be brought into engagement with hook and loop elements of the adapted securing means (19).

3. Landing pad according to Patent Claim 1 or 2, wherein the at least one clearance (12) and the supporting device each have a grid structure or a lattice structure.

4. Landing pad according to one of the preceding patent claims, wherein the supporting device is formed in one piece.

5. Landing pad according to one of the preceding patent claims having a hydrostatic or electric drive via which the supporting device is movable relative to the breached landing surface (14) and/or via which the landing surface (14) is movable relative to the supporting device.

6. Landing pad according to one of the preceding patent claims having a position-compensating device via which the landing surface (14; 714) is movable counter to a rolling and/or yawing and/or pitching movement of the vehicle/vessel (2).

7. Landing pad according to one of the preceding patent claims having at least two driveable wheels (20), which are arranged on an underside, which is arranged opposite to the landing surface (14), of the landing pad (1; 101; 201) or on edge sides of the landing pad, approximately in the region of a transverse axis (22) of the landing pad (1; 101; 201), and having at least two supporting devices (24) which are arranged on the underside at different sides of the transverse axis (22).

8. Landing pad according to Patent Claim 7, wherein axes of rotation of the driveable wheels (20) are arranged approximately coaxially.

9. Landing pad according to Patent Claim 7 or 8 having at least one further supporting device (24) which is arranged on the underside, wherein at least two of the supporting devices (24) are each arranged in a corner region of the carrying device (201) .

10. Landing pad according to one of Patent Claims 7 to 9, wherein the supporting devices each have, for supporting purposes, at least one supporting wheel (524) or at least one sliding piece (24; 124).

11. Landing pad according to one of Patent Claims 7 to 10, wherein the driveable wheels (20) can be driven at different rotational speeds and/or with different directions of rotation.

## Revendications

1. Aire d'atterrissage pour un hélicoptère (6), qui peut être disposée sur un véhicule terrestre ou naval, en particulier sur un navire (2), comprenant une surface d'atterrissage (14 ; 714) sur laquelle l'hélicoptère (6) peut s'appuyer, la surface atterrissage (14 ; 714) étant au moins en partie recouverte par un moyen de fixation plat (18) et comprenant un moyen de fixation plat devant être monté sur l'hélicoptère et pouvant être adapté au moyen de fixation plat de la surface d'atterrissage,
un moyen étant prévu pour desserrer les moyens de fixation les uns des autres, **caractérisée en ce que** la surface d'atterrissage (14) et le moyen de fixation plat (18) sont traversés par au moins un évidement (12) dans lequel, en tant que moyen pour desserrer les moyens de fixation les uns des autres, est reçu un dispositif de support pour supporter l'hélicoptère (6), le dispositif de support pouvant être déplacé par rapport à la surface d'atterrissage (14) et/ou la surface d'atterrissage (14) pouvant être déplacée par rapport au dispositif de support, ou **en ce que** des rouleaux (734) pouvant tourner autour de leurs axes longitudinaux (736) sont prévus en tant que moyens pour desserrer les moyens de fixation les uns des autres, la surface d'atterrissage (714) étant réalisée au moins en partie par le biais de portions de surface d'enveloppe radiales (738, 740) des rouleaux (734).

2. Aire d'atterrissage selon la revendication 1, dont le moyen de fixation plat (18) présente des éléments agrippants qui peuvent être amenés en prise avec des éléments agrippants du moyen de fixation adapté (19).

3. Aire d'atterrissage selon la revendication 1 ou 2, dans laquelle l'au moins un évidement (12) et le dispositif de support présentent à chaque fois une structure de grille ou une structure réticulaire.

4. Aire d'atterrissage selon l'une quelconque des revendications précédentes, dans laquelle le dispositif de support est réalisé d'une seule pièce.

5. Aire d'atterrissage selon l'une quelconque des revendications précédentes, comprenant un entraînement hydrostatique ou électrique par le biais duquel le dispositif de support peut être déplacé par rapport à la surface d'atterrissage (14) interrompue et/ou par le biais duquel la surface d'atterrissage (14) peut être déplacée par rapport au dispositif de support.

6. Aire d'atterrissage selon l'une quelconque des revendications précédentes, comprenant un dispositif de compensation de position par le biais duquel la surface d'atterrissage (14 ; 714) peut être déplacée à l'encontre d'un déplacement de roulis et/ou de lacet et/ou de tangage du véhicule (2).

7. Aire d'atterrissage selon l'une quelconque des revendications précédentes, comprenant au moins deux roues pouvant être entraînées (20) qui sont disposées au niveau d'un côté inférieur de l'aire d'atterrissage (1 ; 101 ; 201) disposé à l'opposé de la surface d'atterrissage (14) ou qui sont disposées au niveau de côtés de bords de l'aire d'atterrissage, par exemple dans la région d'un axe transversal (22) de l'aire d'atterrissage (1 ; 101 ; 201), et comprenant au moins deux dispositifs de support (24) qui sont disposés au niveau du côté inférieur sur des côtés différents de l'axe transversal (22).

8. Aire d'atterrissage selon la revendication 7, dans laquelle des axes de rotation des roues pouvant être entraînées (20) sont disposés approximativement coaxialement.

9. Aire d'atterrissage selon la revendication 7 ou 8, comprenant au moins un dispositif de support supplémentaire (24) qui est disposé au niveau du côté inférieur, au moins deux des dispositifs de support (24) étant à chaque fois disposés dans une région de coin du dispositif porteur (201).

10. Aire d'atterrissage selon l'une quelconque des revendications 7 à 9, dans laquelle les dispositifs de support présentent, pour le support, à chaque fois au moins une roue de support (524) ou au moins un bloc coulissant (24 ; 124) .

11. Aire d'atterrissage selon l'une quelconque des revendications 7 à 10, dans laquelle les roues pouvant être entraînées (20) peuvent être entraînées avec des vitesses de rotation différentes et/ou des sens de rotation différents.
